Europäisches Patentamt

European Patent Office

Office européen des brevets

(19)

(11) Numéro de publication: **0 385 845**

**A1**

(12) **DEMANDE DE BREVET EUROPEEN**

(21) Numéro de dépôt: 90400531.1

(22) Date de dépôt: 26.02.90

(51) Int. Cl.5: **H05B 41/30, H01S 3/097, H02M 3/158**

(30) Priorité: 27.02.89 FR 8902504

(43) Date de publication de la demande:
05.09.90 Bulletin 90/36

(84) Etats contractants désignés:
AT BE CH DE DK ES GB GR IT LI LU NL SE

(71) Demandeur: **Javaux, Jean-Pierre**
34 Rue Pierre Iravaux
F-21100 Dijon(FR)

(72) Inventeur: **Javaux, Jean-Pierre**
**34 Rue Pierre Iravaux**
**F-21100 Dijon(FR)**

(74) Mandataire: **Bruder, Michel et al**
**Cabinet Michel Bruder Conseil en Brevets**
**10, rue de la Pépinière**
**F-75008 Paris(FR)**

(54) **Alimentation électronique en énergie électrique d'une charge, préférentiellement de nature capacitive, telle que particulièrement un tube à décharge, mise périodiquement en court-circuit sans destruction de ladite alimentation.**

(57) L'invention concerne une alimentation électronique d,un récepteur (13) de nature capacitive, tel que particulièrement un tube à décharge, comprenant un générateur (2) de tension continue TC1, convertie par un hacheur (4) en une autre tension continue TC2 alimentant un premier condensateur (6) de stockage d énergie, ladite tension TC2 étant convertie par un onduleur (8) en une tension alternative rectangulaire TA1, attaquant un convertisseur (9) de tension alternative à isolation galvanique, tel que particulièrement un transformateur de puissance, la tension alternative TA2 étant alors redressée en une tension continue TC3 placée aux bornes du récepteur (13). Cette alimentation est caractérisée, d'une part, en ce que l'étage de commande (50) de l'onduleur (8) lui procure un fonctionnement à rapport cyclique constant, très proche de 50%, et d'autre part, en ce que l'étage de commande du hacheur (4) possède un moyen pour adapter son rapport cyclique de fonctionnement en fonction du résultat de la comparaison effectuée entre le courant consommé par le récepteur (13) et un courant de consigne prédéterminé, et par ailleurs en fonction du résultat de la comparaison effectuée entre la tension continue TC3 appliquée sur le récepteur (13) et une tension de consigne prédéterminée.

EP 0 385 845 A1

_Fig.2_

L'invention concerne une alimentation électronique en énergie électrique d'une charge, préférentiellement de nature capacitive, telle que particulièrement un tube à décharge, mise périodiquement en court-circuit sans destruction de ladite alimentation.

Le domaine de l'invention est celui de l'alimentation en énergie électrique des matériels de signalisation dits "embarqués", tels que des feux d'obstacle secourus, en usage dans l'aéronautique civile et militaire.

Un autre domaine de l'invention est celui de l'alimentation en énergie électrique de certains lasers à décharge, tels que les lasers à colorant ou les lasers à gaz.

Pour alimenter des récepteurs à caractère capacitif, il est nécessaire de prévoir sur l'alimentation électrique un moyen destiné à la protéger contre les surintensités engendrées par des court-circuits, accidentels ou provoqués, du récepteur ; il peut à cet égard s'agir du déclenchement d un tube à décharge ou de celui d un laser.

Des alimentations spécifiques pour cet usage existent et les plus connues utilisent, comme moyen de controler l'énergie délivrée au récepteur, un modulateur à largeur d impulsions dont le rôle est de commander un convertisseur statique à semi-conducteurs, dit onduleur, procurant un découpage de la tension continue fournie, soit par une batterie, soit par un redresseur d un courant alternatif, tel que celui du "secteur", de manière à obtenir une tension alternative rectangulaire, dont le rapport cyclique reproduit le rapport cyclique dudit modulateur à largeur d impulsions ; cette tension alternative rectangulaire est transformée en une autre tension alternative rectangulaire d'amplitude en général très supérieure, au moyen, par exemple, d un transformateur de puissance ; un redresseur haute-tension, par exemple un pont de diodes, convertit alors le plus souvent la haute-tension alternative en une haute-tension continue appliquée aux bornes du récepteur.

On peut imposer un rapport cyclique à l'onduleur qui soit proche d une valeur maximale de 50 %, ce qui assure un transfert maximal de l'énergie vers le récepteur. Il est à noter que la valeur de 50 % est une limite à ne pas dépasser si on veut empêcher une conduction simultanée des commutateurs électroniques composant l'onduleur.

La mesure du courant consommé par celui-ci constitue un moyen de garantir la protection des éléments qui composent l'alimentation ; par comparaison de ce courant à un courant de consigne à ne pas dépasser, on agit sur ledit rapport cyclique, que l'on peut alors diminuer jusqu'à une valeur nulle. Pour cette valeur extrême, il n'y a plus de transfert d'énergie vers le récepteur et si celui-ci est mis en court-circuit, la forte surintensité en résultant au "secondaire" du transformateur ne provoque pas la destruction de l'onduleur situé au "primaire" ; aucune tension n est appliquée sur ledit onduleur et la surintensité apparaissant au "primaire", pratiquement en circuit-ouvert, en réaction de la surintensité du "secondaire", traverse sans dommage l'onduleur.

Les alimentations utilisant la structure générale précédente possèdent cependant de graves inconvénients.

En effet, la régulation mise en oeuvre n'utilise pas au mieux les performances potentielles des éléments constituant ces alimentations ; l'onduleur subit pendant la charge du récepteur des crêtes de courant de forte intensité dues à la modification permanente du rapport cyclique, ces crêtes de courant étant dues à la réaction du transformateur, lequel s oppose à toutes variations de tension, en particulier aux variations brusques résultant de la transition de la tension rectangulaire qui lui est appliquée. Lorsque cette tension est nulle, comme elle se doit de l'être pour provoquer une baisse du courant fourni au récepteur, il subsiste dans le transformateur une énergie stockée qui provoque, à court terme, lesdites crêtes de courant et, à long terme, un échauffement important dudit transformateur.

Il y a en conséquence une distorsion importante du signal alternatif rectangulaire appliqué au "primaire", ce qui nuit à son redressement correct par des moyens adéquats au "secondaire".

En outre, le rendement de transfert de l'énergie vers le récepteur, en raison de l'énergie dissipée dans le transformateur, est mauvais et reste bien en deçà des performances attendues d'une alimentation réalisée avec des composants performants, du type des transistors à effet de champ de puissance et des noyaux magnétiques à forte perméabilité et faibles pertes.

L,invention vise à remédier à ces inconvénients en fournissant une alimentation électronique en énergie électrique d'un récepteur, préférentiellement de nature capacitive, tel que particulièrement un tube à décharge, comprenant:
- un générateur de tension continue TC1,
- un convertisseur statique à semi-conducteurs, dit hacheur, convertissant ladite tension TC1 en une tension continue TC2, ce qui procure un moyen de réguler l'intensité moyenne du courant issu dudit hacheur,
- un condensateur intermédiaire de stockage d'énergie placé en parallèle à la sortie dudit hacheur,
- un convertisseur statique à semi-conducteurs, dit onduleur, procurant un découpage de la tension TC2 de manière à obtenir une tension alternative TA1 rectangulaire,
- un convertisseur de tension alternative à isolation galvanique, tel qu'un transformateur, composé d'une entrée dite "primaire" et d'une sortie dite "secondaire", transformant la tension TA1 appliquée au "primaire" en une tension alternative rectangulaire TA2 au "secondaire",
- un moyen de redressement de la tension TA2 procurant une tension continue TC3 alimentant le récepteur,
- un moyen de mise en court-circuit périodique dudit récepteur,
ladite alimentation étant caractérisée en ce que, d'une part, l'étage de commande de l'onduleur lui procure un fonctionnement à rapport cyclique constant, très proche de 50 %, et en ce que, d'autre part, l'étage de commande du hacheur possède un moyen pour adapter son rapport cyclique de fonctionnement en fonction du résultat de la comparaison effectuée entre le courant consommé par le récepteur et un courant de consigne, et par ailleurs en fonction du résultat de la comparaison effectuée entre la tension continue TC3 appliquée sur le récepteur et une tension de consigne.

Un avantage important procuré par l'invention est que la régulation de l'alimentation 1 ne s'effectue donc pas par une modification du rapport cyclique de son étage de puissance, constitué par l'onduleur et le transformateur, qui, étant constamment maintenu proche de 50 %, procure un fonctionnement très régulier au convertisseur de tension alternative à isolation galvanique, normalement constitué par un transformateur de puissance.

La tension alternative rectangulaire TA1 est alors convertie avec une très faible distorsion en une tension alternative rectangulaire TA2. Le rapport cyclique de 50 % permet par ailleurs de situer le transformateur dans un régime de fonctionnement où il ne stocke pratiquement aucune énergie entre chaque alternance de la tension TA1 ; le rendement est en conséquence considérablement amélioré, et l'échauffement du transformateur est alors très faible, ce qui permet d'éviter l'emploi d'un moyen de refroidissement auxiliaire, tel qu'un ventilateur ou un radiateur, obligatoire sur les dispositifs du même type connus à ce jour.

Tous ces avantages de l'alimentation 1 selon l'invention, qu'il s'agisse du rendement, de l'allégement en composants et de la simplification de la maintenance qui en découlent, s'avèrent décisifs quant à l'utilisation de telles alimentations dans les systèmes dits "embarqués", très utilisés notamment dans l'aéronautique civile et militaire ; le gain en poids et l'amélioration du rendement, dans un domaine où les sources d'énergie doivent également être "embarquées", constitue un véritable progrès.

D'autres caractéristiques et avantages de l'alimentation 1 selon l'invention ressortiront mieux de la description qui va suivre d'un mode de réalisation préféré et donné à titre d'exemple non limitatif en référence aux dessins annexés sur lesquels:
- la figure 1 est un schéma synoptique de la structure globale d'une alimentation électronique d'un type connu,
- la figure 2 est un schéma synoptique de la structure globale de l'alimentation conforme à l'invention,
- la figure 3 est un chronogramme de la tension aux bornes du condensateur intermédiaire de stockage situé entre le hacheur et l'onduleur,
- la figure 4 est un schéma électronique du hacheur conforme au mode de réalisation préféré de l'invention,
- la figure 5 est un schéma électronique de l'onduleur conforme au mode de réalisation préféré de l,invention,
- la figure 6 est un schéma électronique de l'onduleur suivant une autre variante de réalisation de l'invention,

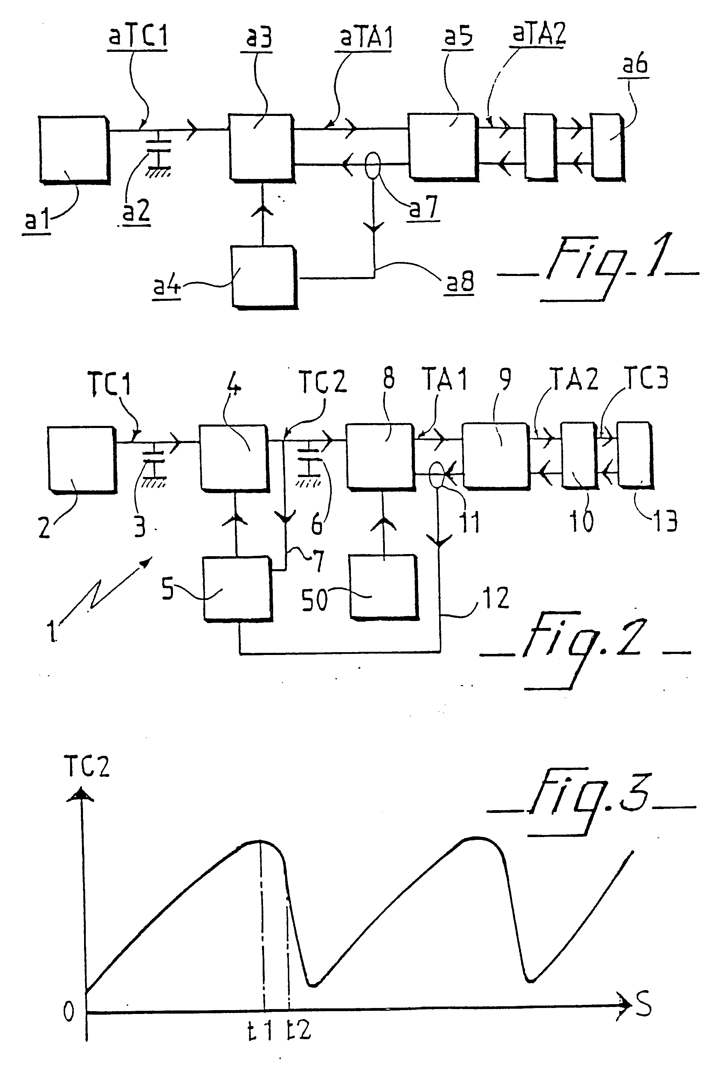

On comprendra mieux l'invention en considérant une alimentation d'un type connu dont la structure globale est représentée sur la figure 1. Un générateur a1 de tension continue aTC1 charge un condensateur a2 placé à ses bornes ; la tension aTC1 est appliquée à l'entrée d'un onduleur a3, commandé alternativement par un modulateur à largeur d'impulsions a4. La tension alternative rectangulaire aTA1 obtenue est convertie par le transformateur a5 en une autre tension alternative rectangulaire aTA2 qui alimente, après redressement, le récepteur a6. Une sonde a7 prélève l'image du courant circulant au "primaire" du transformateur qui est égal, au rapport de transformation près, au courant circulant au "secondaire" ; la mesure de la sonde a7 sert à réguler, par l'intermédiaire du branchement a8, le rapport cyclique du modulateur a4.

Considérons maintenant, conformément à la figure 2, la structure générale de l'alimentation électronique 1 selon l'invention. Cette alimentation 1 comprend:
- un générateur 2 de tension continue TC1 qui charge un condensateur intermédiaire 3 de stockage de l'énergie électrique,
- un hacheur 4 transformant la tension TC1 en une tension continue TC2,
- un modulateur 5 à largeur d'impulsions qui commande le hacheur 4, ce qui permet de faire varier l'amplitude de la tension TC2 et l'intensité moyenne du courant issu dudit hacheur 4,
- un condensateur 6 de stockage de l'énergie transférée par le hacheur 4,
- un branchement 7, situé entre la sortie du hacheur 4 et une entrée du modulateur 5, permettant de prélever la tension TC2 et de la comparer, dans ledit modulateur 5, à une tension de consigne prédéterminée, de façon à réagir sur le rapport cyclique du hacheur 4 en cas de dépassement de ladite tension de consigne,

- un onduleur 8 découpant la tension TC2 en une tension alternative rectangulaire TA1,

- un circuit de commande 50 de l'onduleur 8 lui procurant un fonctionnement à rapport cyclique constant, voisin de 50 %, ledit circuit 50 pouvant être par exemple un modulateur à largeur d,impulsions, identique au modulateur 5, dont on n'utilise pas les possibilités de modulation, ce qui simplifie la conception de l'alimentation 1,

- un convertisseur 9 de tension alternative à isolation galvanique, tel qu'un transformateur 91, convertissant la tension TA1 en une tension alternative rectangulaire TA2, ayant subie une très faible distorsion,

- un moyen 10 adéquat, tel qu'un pont de diodes, pour redresser la tension TA2 en une tension continue TC3,

- une sonde de courant 11, telle que par exemple un transformateur d intensité, prélevant l'image du courant circulant au "primaire" du convertisseur 9 à isolation galvanique, cette mesure réagissant par l'intermédiaire du branchement 12 sur le rapport cyclique du modulateur 5 à largeur d impulsions, par comparaison avec un courant de consigne à ne pas dépasser.

La comparaison de l'alimentation électronique de l'art antérieur et de l'alimentation 1 selon l'invention illustre tout l'intérêt de l'incorporation d un générateur de courant, du type d'un hacheur 4, en amont de l'onduleur 8 ; la réaction s'effectue en agissant sur le rapport cyclique du hacheur 4, sur la tension TC2 fournie par celui-ci aux bornes du condensateur 6 et sur le courant d'alimentation de l'onduleur 8. Lors de la charge du récepteur 13, la tension TC2 varie linéairement et alimente progressivement l'étage de puissance, composé de l'onduleur 8 et du convertisseur 9 de tension alternative à isolation galvanique.

La pente de la tension TC2 peut en outre être réglée ; un circuit à constante de temps réglable est en effet intercalé entre le branchement 7 et le modulateur 5 d'une part, entre le branchement 12 et le modulateur 5 d'autre part, ce qui procure un moyen de faire varier la sensibilité du modulateur 5 vis à vis des différences de courant ou de tension mesurées entre, d'une part, la tension TC2 et la tension de consigne, et entre, d'autre part, le courant circulant au "primaire" du convertisseur 9 et un courant de consigne. Il est à noter que le courant circulant au "primaire" est égal, à un rapport de transformation près, au courant circulant au "secondaire" à travers le récepteur 13. La charge s'effectue en conséquence en fonction du courant consommé par le récepteur ; en particulier, si on met celui-ci en court-circuit, un courant de forte intensité va être détecté par la sonde de courant 11 et interrompre complètement le hacheur 4, par mise à zéro du rapport cyclique du modulateur 5 à largeur d impulsions. De même, les crêtes de courant vont-elles être détectées et provoquer la réduction en largeur des impulsions fournies par le modulateur 5, voire leur suppression.

Une caractéristique complémentaire et importante de l'alimentation 1 selon l'invention consiste , d'une part, en ce que la fréquence de commande du hacheur 4 est au moins double, et préférentiellement double, de la fréquence de découpage de l'onduleur 8, d'autre part, en ce que ces fréquences ne sont pas synchronisées, et en outre, en ce qu'elles sont toutes les deux nettement supérieures à la fréquence de mise en court-circuit de la charge.

Cette configuration vise à diminuer l'ondulation de la tension TC2, en évitant que le condensateur 6 de stockage intermédiaire de l'énergie ne soit plus alimenté par le hacheur 4 lorsqu'il y a débit de courant dans le récepteur 13, ce qui provoque un appel de courant en aval dudit condensateur 6 ; puisque le hacheur 4 fonctionne en réduction de largeur d'impulsions, il faut que les temps morts résultant de son fonctionnement avec un rapport cyclique inférieur à 50 % soient le moins sensibles possibles vis à vis des commutations de l'onduleur 8.

Le choix de fréquences asynchrones procède de la même exigence ; on évite de cette manière les risques d'apparition de "crevasses" dans la tension d'alimentation TC3 du récepteur 13, qui perturberaient la conversion de tension effectuée entre le "primaire" et le "secondaire" du convertisseur 9 à isolation galvanique, en provoquant, par modification brutale de la tension TC2, d'allure identique à la tension TC3, des crêtes de courant nuisibles au rendement énergétique dudit convertisseur 9, ainsi qu'il a été expliqué précédemment.

A titre d'exemple non limitatif, on a réalisé une alimentation électronique 1 conforme à l'invention pour laquelle la fréquence de commande du hacheur 4 est égale à 50kHz, celle de l'onduleur 8 est égale à 25 kHz et celle de mise en court-circuit du récepteur 13 vaut environ 1 Hz.

Il est à noter que la tension TC3 est égale, au rapport de transformation du convertisseur 9 à isolation galvanique près, à la tension TC2 ; c est une tension en dents de scie, au rythme de charge et de décharge (et donc de mise en court-circuit), du récepteur 13. La figure 3 est un chronogramme de ladite tension TC2.

Il n'y a, a priori, pas de limitation à une augmentation importante des fréquences de commande du hacheur 4 et de l'onduleur 8, les composants électroniques disponibles à ce jour permettant d'obtenir, avec quelques précautions d'usage connues de l'homme de métier ordinaire, des fréquences voisines du mégahertz. Cette augmentation procure alors une réduction du taux d'ondulation des tensions TC2, TA1 et donc TC3, sans détérioration du rendement énergétique ; un compromis expérimental spécifique est à trouver en fonction de l'application traitée.

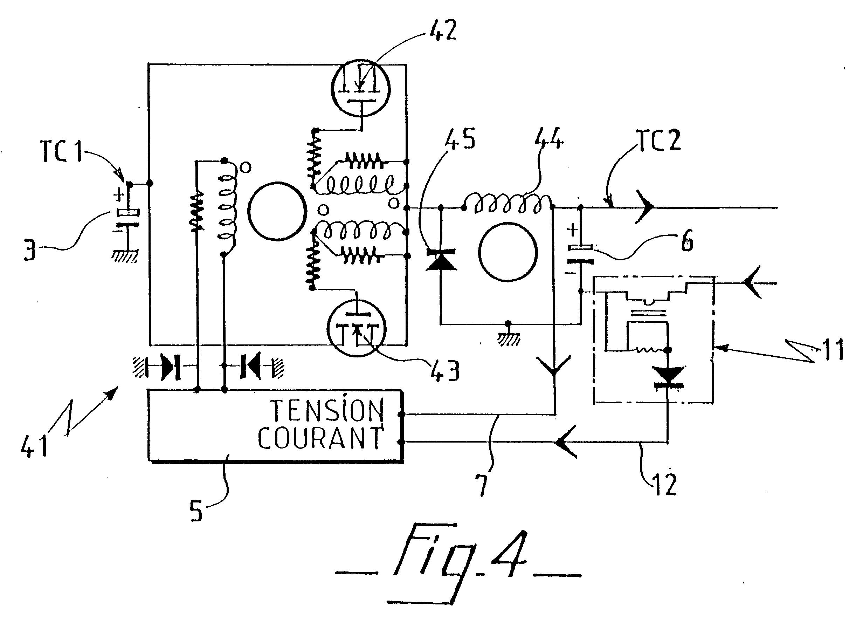

La figure 4 illustre un mode préféré de réalisation du hacheur 4. On choisit d'utiliser un hacheur série 41, dit aussi hacheur dévolteur, ce qui procure une tension continue TC2 inférieure ou égale à la tension TC1 ; le hacheur série 41 se comporte, en conséquence, comme un générateur de courant variable, dont la valeur moyenne est directement proportionnelle au rapport cyclique du modulateur 5 à largeur d impulsions. Ce hacheur 41 comprend:
- une association en parallèle de deux commutateurs, tel que, par exemple, des transistors de puissance 42,43 à effet de champ, ce qui simplifie leur commande, effectuée en opposition de phase par deux sorties complémentaires du modulateur 5,
- une self 44 de blocage et d accumulation d'énergie, qui doit être bobinée sur un tore d'un matériau magnétique à forte perméabilité et à faibles pertes, du type du molypermalloy dit MPP, ce matériau supportant sans saturation d'être soumis à un courant continu de forte intensité,
- une diode rapide 45, dite "diode de roue libre", servant à la récupération de l'énergie emmagasinée dans la self 44, cette récupération s'effectuant lors des temps morts de commande du hacheur 41, situés entre chaque impulsion issue du modulateur 5.

Le condensateur 6 intermédiaire de stockage de l'énergie peut être ou non intégré à la structure du hacheur 41, puisqu'il sert entre autres choses, en liaison avec la self 44, de filtre pour la tension présente aux bornes de la diode 45, la constante de temps de ce filtre étant déterminée par les valeurs dudit condensateur 6 et de la self 44. Il est à noter que le taux d'ondulation du courant issu du hacheur 41 varie à l'inverse de ladite constante de temps, et également à l'inverse de la fréquence de commande du hacheur 41 ; on a donc tout intérêt à choisir une constante de temps élevée et à augmenter ladite fréquence.

Dans la configuration précédente du hacheur 41, dont la structure est très connue, l'association en parallèle des deux transistors 42,43 procure une fiabilité excellente audit hacheur 41 ; en effet, le courant traverse alternativement le transistor 42 puis le transistor 43, qui subissent donc un échauffement moindre, ce qui est un avantage décisif vis à vis de leur durée de vie.

Il est à noter, en outre, l'importance du choix d'une "diode de roue libre" 45 rapide, dont le temps de recouvrement faible (en général de l'ordre de 25 ns) procure des pertes minimales de commutation dans la boucle composée par ladite diode 45 et la self 44.

Il convient en conséquence de choisir des composants électroniques performants si l'on veut utiliser au mieux les possibilités offertes par l'invention, en ce qu'elles dépendent étroitement de la progressivité et de la régularité de la tension TC2 et du courant fourni par le hacheur 4.

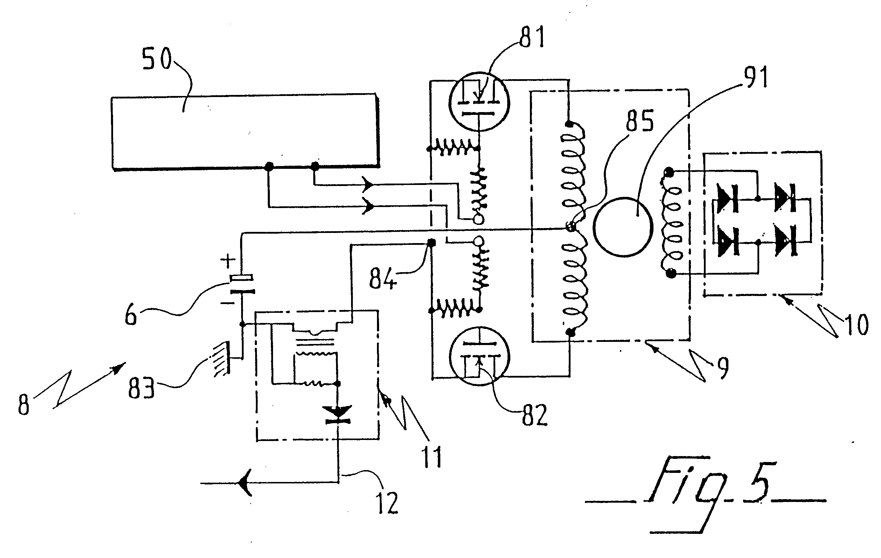

Par ailleurs, conformément à la figure 5, une caractéristique complémentaire de l'alimentation 1 consiste, d'une part, en ce que l'onduleur 8 est un montage symétrique en "push-pull", associant deux commutateurs, tels que, par exemple, deux transistors de puissance 81 et 82, commandés en opposition de phase avec un rapport cyclique très proche de 50 %, ce qui procure l'avantage de pouvoir les commander par rapport à la référence de potentiel de l'alimentation 1 dite "masse" 83, d'autre part, en ce que le point commun 84 aux deux commutateurs est relié à la "masse" 83 par l'intermédiaire d'une sonde 11 de courant, telle que par exemple un transformateur d'intensité, et en outre, en ce que le hacheur 4 est relié en sortie à un point milieu 85 du "primaire" du convertisseur 9 de tension alternative à isolation galvanique, ce qui permet de gérer linéairement, en fonction de l'intensité du courant mesuré par ladite sonde 11, la conversion de la tension continue TC1 fournie par le générateur 2 en la tension alternative TA2 présente au "secondaire" dudit convertisseur 9 de tension alternative à isolation galvanique.

L'utilisation d,un montage en "push-pull" pour réaliser l'onduleur 8 possède d'autres avantages, hormis celui de permettre la commande des transistors de puissance 81,82 par rapport à la "masse" 83; on connait en effet la fiabilité d un tel montage dans l'amplification de puissance en classe "B". Par ailleurs, la tension récupérée au "secondaire" est égale au double de celle obtenue avec un autre montage utilisant seulement deux transistors, autre qu'un "push-pull", ce qui permet, lorsque le rapport de transformation entre les tensions TA1 et TA2 est grand, de simplifier le bobinage du transformateur 91, constituant normalement le convertisseur 9 à isolation galvanique.

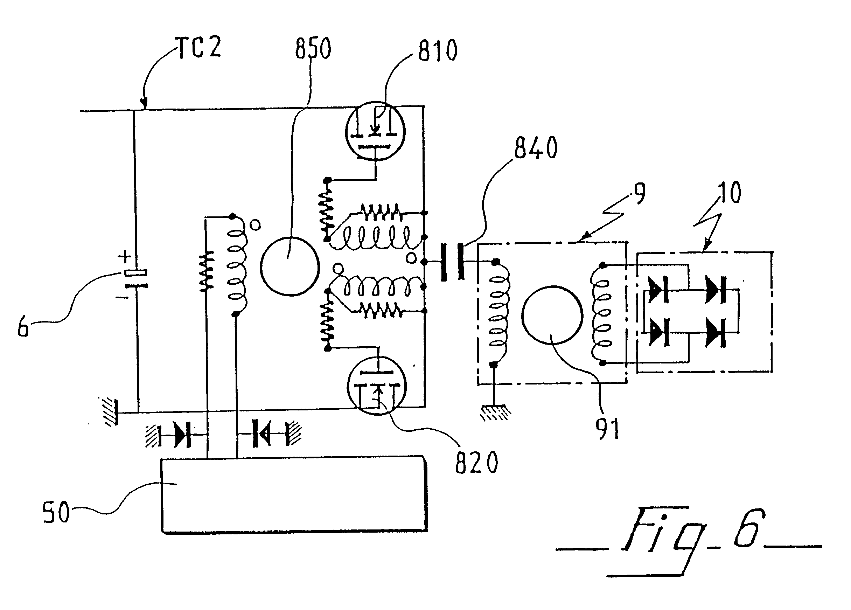

Cependant, l'utilisation d'un montage en "push-pull" n'est pas obligatoire et, conformément à la figure 6, une variante de réalisation de l'alimentation électronique 1 selon l'invention consiste en ce que l'onduleur 8 comprend un nombre pair de commutateurs, tels que par exemple des transistors de puissance 810 et 820, associés par paire, les transistors 810 et 820 d'une paire constituant un montage dit en "demi-pont", commandés en opposition de phase avec un rapport cyclique proche de 50 %, le point commun 840 de deux commutateurs d'une paire étant relié directement à un pôle adéquat du "primaire" du convertisseur 9 de tension alternative à isolation galvanique, la sortie du hacheur 4 alimentant alors directement le "demi-pont" entre ses deux bornes principales.

Dans le cas où l'onduleur 8 est un "demi-pont", chaque transistor de puissance 810 et 820 doit être commandé par l'intermédiaire d'un transformateur 850, puisque l'un des transistors doit être commandé par rapport au point commun 840 aux deux commutateurs qui se situe à un potentiel flottant. En outre, le convertisseur 9 à isolation galvanique ne possède pas de point milieu et il faut en conséquence que le rapport de transformation dudit convertisseur 9 soit égal au double de celui qui est nécessaire pour obtenir la même tension dans le montage en "push-pull".

On peut également réaliser un "pont complet" ; on récupère alors la totalité de la tension aux bornes du condensateur 6 de stockage, de la même manière que sur le montage en "push-pull". Le transformateur 91 ne possède alors pas de point milieu mais le rapport de transformation est comparable à celui du montage en "push-push". Il est à noter que la commande des quatre transistors formant un "pont complet" monophasé nécessite également l'utilisation d'un transformateur.

Dans ces deux montages en "demi-pont" et en "pont complet", les principes de fonctionnement de l'alimentation électronique 1 sont les mêmes que pour le montage "push-pull", c'est-à-dire que l'on gère leur alimentation en tension linéairement et que le courant fourni par le hacheur 4 dépend du courant consommé par le récepteur 13 au "secondaire" du convertisseur 9 à isolation galvanique. La structure générale de l'alimentation 1 procure, dans toutes les réalisations particulières de l'onduleur 8 précitées, un rendement énergétique nettement supérieur au rendement existant sur les alimentations d'un type connu à ce jour.

Une caractéristique complémentaire et importante de l'alimentation 1 selon l'invention concerne le soin avec lequel doit être réalisé le convertisseur 9 de tension alternative à isolation galvanique ; ainsi, l'alimentation 1 est caractérisée, d'une part, en ce que le convertisseur 9 de tension alternative à isolation galvanique est un transformateur 91 bobiné sur un tore, d'autre part, en ce que ce tore est constitué par un matériau magnétique à forte perméabilité, tel que par exemple une ferrite haute-fréquence, et en outre, en ce que le bobinage dudit transformateur 91 est réalisé de manière à minimiser la capacité parasite existant entre son "primaire" et son "secondaire".

Les paramètres du transformateur de puissance 91 ainsi réalisé jouent un rôle déterminant sur l'équilibre existant entre les différentes parties composant l'alimentation électronique 1 ; particulièrement, le courant fourni au "primaire" de ce transformateur 91 par le hacheur 4 et celui consommé au "secondaire" dudit transformateur 91 par le récepteur 13, doivent être égaux en permanence au rapport de transformation près. L'utilisation d'un tore magnétique permet, en conséquence, de réduire les pertes magnétiques et donc les déphasages existant entre le "primaire" et le "secondaire" ; le choix d'un matériau à forte perméabilité, du type d'une ferrite, permet en outre de diminuer les dimensions géométriques de ce tore et son poids, ce qui a une grande importance vis-à-vis de la compacité et de la légèreté de l'alimentation électronique 1 lorsque celle-ci est destinée à alimenter des matériels dits "embarqués" ; enfin, le bobinage des enroulements "primaire" et "secondaire" a une grande importance, non seulement parce que le transformateur est destiné à convertir généralement de hautes fréquences, mais également parce qu'il est nécessaire d'éviter tout couplage capacitif entre lesdits enroulements. On utilisera, par ailleurs et préférentiellement, du fil divisé qui possède des caractéristiques excellentes en haute fréquence vis-à-vis des pertes provoquées par "l'effet de peau" responsable de l'essentiel des pertes dans la plupart des transformateurs.

De manière inattendue, le transformateur 91 réalisée dans les conditions précédentes possède donc non seulement de bonnes qualités à l'égard du rendement énergétique de conversion, mais également des qualités de légèreté, de compacité et de fiabilité.

Il est bien évident, que cette réalisation particulière d'un transformateur 91 ne constitue pas la seule possibilité de mise en oeuvre d'un convertisseur 9 à isolation galvanique convenant à l'alimentation électronique 1 selon l'invention ; tout autre transformateur réalisé plus classiquement et présentant par exemple un entrefer conviendrait. Cependant, les dimensions géométriques du noyau magnétique ne permettraient pas de réaliser une alimentation compacte et légère telle qu'avantageusement réalisée selon le mode préféré de l'invention.

De la même façon, il a été constaté expérimentalement qu'un temps mort est nécessaire entre chaque demie période du découpage de la tension continue TC2 ; la nécessité de ce temps mort peut sans doute s'expliquer en fonction de processus complexes mettant en cause le courant du hacheur 4, le courant consommé par le récepteur 13 et les distorsions éventuelles du convertisseur 9 à isolation galvanique, telles que celles dues, par exemple, à l'hystéris du noyau magnétique du transformateur 91. La durée de ce temps mort, en raison de l'existence de la régulation en courant et en tension, spécifique à l'alimentation 1 selon l'invention, joue un rôle important à l'égard de l'équilibre qui doit être trouvé entre le courant fourni par le hacheur 4 et le courant qui est consommé par le récepteur 13 ; il est donc nécessaire d'effectuer un compromis entre les valeurs souhaitées pour ces courants, dépendant de l'application, et les caractéristiques du transformateur 91.

Le rapport cyclique de commande de l'onduleur 8 demeure cependant très proche de 50 % ; l'existence du temps mort entre chaque demie période de découpage de la tension continue TC2, permet par ailleurs d'éviter la conduction simultanée des deux transistors 81,82 dans le cas de l'utilisation d'un montage en "push-pull", ou la condition simultanée des deux transistors 810,820 d'une paire constituant un "demi-pont" dans le cas de l'utilisation d'un montage en "demi-pont" ou en "pont complet".

Cependant, malgré toutes les précautions prises pour gérer linéairement l'alimentation en tension de l'onduleur 8 et du convertisseur 9 de tension alternative à isolation galvanique, telle qu'un transformateur 91, il peut s'avérer nécessaire de protéger, d une manière complémentaire, ledit onduleur 8 lors de la pointe de courant provoquée par la mise en court-circuit périodique du récepteur 13 situé au "secondaire".

Il est donc prévu un circuit auxiliaire de contrôle général de l'alimentation 1 qui est relié à l'étage de commande 50 de l'onduleur 8, à l'étage de commande 5 du hacheur 4 et au moyen de mise en court-circuit du récepteur 13, de manière à pouvoir interrompre le fonctionnement dudit hacheur 4 avant l'ordre de mise en court-circuit, c'est-à-dire, par exemple, de décharge d'un tube à gaz.

Sur la figure 3, le temps t1 correspond à l'ordre d,interruption de fonctionnement du hacheur 4 donné par le circuit auxiliaire et le temps t2 correspond à l'ordre de mise en court-circuit du récepteur 13. A partir du temps t1, la tension TC2 aux bornes du hacheur 4 commence à décroitre et à l'instant t2, ladite tension TC2 possède une amplitude suffisament faible pour que la puissance instantanée mise en jeu aux bornes de l'onduleur 8, et qui est égale au produit de ladite tension TC2 et du courant circulant au "primaire", ne provoque pas la destruction des transistors composant ledit onduleur, ni l'échauffement excessif du convertisseur 9 à isolation galvanique.

Par ailleurs, le circuit auxiliaire de contrôle de l'alimentation 1 comprend une horloge cadencée par un quartz, tel que particulièrement un quartz de montre, qui procure l'avantage de fournir une grande précision lors de la séquence de fonctionnement de l'alimentation. Cette précision est nécessaire au bon fonctionnement de l'alimentation 1 en raison des temps très divers mis en oeuvre ; dans une variante non limitative de réalisation de l'alimentation 1, la fréquence du hacheur 4 est égale à 50 kHz, celle de l'onduleur 8 est égale à 25 kHz et celle de mise en court-circuit du récepteur 13 vaut environ 1 Hz ; en outre, le temps mort de l'onduleur 8 doit se situer aux environs de 1 microseconde, et l'intervalle de temps existant entre les instants t1 et t2 est pris égal à 80 millisecondes ; par ailleurs, il est nécessaire que les fréquences de commande du hacheur 4 et de l'onduleur 8 soient asynchrones, ce qui conduit à gérer également leur déphasage. Une bonne précision sur l'horloge intégrée au circuit auxiliaire de contrôle de l'alimentation 1 permet en conséquence de correctement synchroniser ses différentes commandes de fonctionnement.

Il est à noter que l'ordre d'interdiction de fonctionnement du hacheur 4 donné à l'instant t1 n'est aucunement obligatoire pour un fonctionnement correct de l'alimentation 1 ; particulièrement en basse tension, lorsque le générateur 2 de tension continue TC2 est par exemple une batterie, cette disposition ne s'avère pas nécessaire.

On notera que la tension obtenue au "secondaire" du convertisseur 9 à isolation galvanique, tel que, par exemple, un transformateur de puissance 91, peut être très élevée ; dans la variante de réalisation de l'alimentation 1 précédemment citée, le générateur 2 est une batterie délivrant une tension de 48 V continue, l'onduleur 8 est un montage en "push-pull", le transformateur 91 possède donc un point milieu 85, et le rapport de transformation permet d'obtenir, en utilisant un tore magnétique en ferrite de diamètre égal 60 millimètres, une haute-tension sur un tube à décharge aussi élevée que 1000 V, ceci avec un rendement supérieur à 80 %.

Les possibilités de l'invention sont, comme on l'a vu, très importantes et ses applications pourront à l'avenir être encore élargies si on utilise des composants électroniques, en particulier des transistors à effet de champ, encore plus performants ; il est en effet prévu de substituer à l'ensemble constitué par les transistors de puissance de l'onduleur, par leur circuit 50 de commande et par la sonde de courant 11, un ensemble comprenant uniquement un circuit de commande à niveau logique et des transistors récents pouvant être commandés à ce niveau, ceux-ci possédant par ailleurs sur le même boitier des circuits de contrôle et de sécurité (transistors du type connu sous le nom anglais de Smartpower), et ayant en outre des broches supplémentaires servant à prélever le courant circulant véritablement dans le transistor avec un grand rapport de transformation (transistors dits "à miroir de courant" ou Sensefet), aptes à permettre la contre-réaction par le branchement 12 vers le modulateur 5 à largeur d'impulsions.

Les applications de l'invention sont nombreuses et concernent, d'une part, l'alimentation en énergie électrique des matériels de signalisation dits "embarqués", tels que des feux d'obstacle secourus, en usage dans l'aéronautique civile et militaire, d'autre part, l'alimentation en énergie électrique de certains lasers à décharge, tels que les lasers à colorant ou les lasers à gaz, et en outre, l'alimentation de balises "isolées", dont la source d énergie peut alors provenir d'une conversion photovoltaïque de l'énergie solaire (panneau solaire), par exemple en montagne, où il n'y a pas distribution domestique de l'énergie électrique.

**Revendications**

1 - Alimentation électronique en énergie électrique d'un récepteur (13), préférentiellement de nature capacitive, tel que particulièrement un tube à décharge, comprenant:
- un générateur (2) de tension continue TC1,
- un convertisseur statique à semi-conducteurs, dit hacheur (4) , convertissant ladite tension TC1 en une tension continue TC2, ce qui procure un moyen de réguler l'intensité moyenne du courant issu dudit hacheur (4) ,
- un condensateur (6) intermédiaire de stockage d'énergie placé en parallèle à la sortie dudit hacheur (4) ,
- un convertisseur statique à semi-conducteurs, dit onduleur (8), procurant un découpage de la tension TC2 de manière à obtenir une tension alternative TA1 rectangulaire,
- un convertisseur (9) de tension alternative à isolation galvanique, composé d'une entrée dite "primaire" et d'une sortie dite "secondaire", transformant la tension TA1 appliquée au "primaire" en une tension alternative rectangulaire TA2 au "secondaire",
- un moyen (10) de redressement de la tension TA2 procurant une tension continue TC3 alimentant le récepteur (13),
- un moyen de mise en court-circuit périodique du récepteur (13),
ladite alimentation (1) étant caractérisée , d'une part, en ce que l'étage de commande (50) de l'onduleur (8) lui procure un fonctionnement à rapport cyclique constant, très proche de 50%, et d'autre part, en ce que l'étage de commande du hacheur (4) possède un moyen pour adapter son rapport cyclique de fonctionnement en fonction du résultat de la comparaison effectuée entre le courant consommé par le récepteur (13) et un courant de consigne prédéterminé, et par ailleurs en fonction du résultat de la comparaison effectuée entre la tension continue TC3 appliquée sur le récepteur (13) et une tension de consigne prédéterminée.

2 - Alimentation selon la revendication 1, caractérisée, d'une part, en ce que la fréquence de commande du hacheur (4) est, au moins et préférentiellement double, de la fréquence de découpage de l'onduleur (8), d'autre part, en ce que ces fréquences ne sont pas synchronisées, et en outre, en ce qu'elles sont toutes les deux nettement supérieures à la fréquence de mise en court-circuit du récepteur (13).

3 - Alimentation selon l'une quelconque des revendications 1 ou 2, caractérisée en ce que le hacheur (4) est un hacheur série (41) dont l'étage de commande est un modulateur 5 à largeur d'impulsions, ledit hacheur (41) comprenant, en série, un double commutateur, réalisé par exemple par l'association en parallèle de deux transistors de puissance (42,43) commandés en opposition de phase par le modulateur (5) à largeur d'impulsions, ce qui procure un partage du courant instantané circulant dans le hacheur (41) entre lesdits commutateurs.

4 - Alimentation selon l'une quelconque des revendications 1,2 ou 3, caractérisée , d une part, en ce que l'onduleur (8) est un montage symétrique en "push-pull", associant deux commutateurs, tels que par exemple deux transistors de puissance (81,82), commandés en opposition de phase avec un rapport cyclique très proche de 50%, d autre part, en ce que le point commun (84) aux deux commutateurs est relié à la "masse" (83) par l'intermédiaire d une sonde (11) de courant, telle que par exemple un transformateur d'intensité, et en outre, en ce que le hacheur (4) est relié en sortie à un point milieu (85) du "primaire" du convertisseur (9) de tension alternative à isolation galvanique, ce qui permet de gérer linéairement, en fonction de l'intensité du courant mesuré par ladite sonde (11), la conversion de la tension continue TC1 fournie par le générateur (2) en la tension alternative TA2 présente au "secondaire" dudit convertisseur (9) de tension alternative à isolation galvanique.

5 - Alimentation selon l'une quelconque des revendications 1,2 ou 3, caractérisée en que l'onduleur (8) comprend un nombre pair de commutateurs, tels que par exemple des transistors (810,820) de puissance, associés par paire, les transistors (810,820) d'une paire constituant un montage dit en "demi-pont", commandés en opposition de phase avec un rapport cyclique proche de 50%, le point commun (840) de deux commutateurs d'une paire étant relié directement à un pôle adéquat du "primaire" du convertisseur (9) de tension alternative à isolation galvanique, la sortie du hacheur (4) alimentant alors directement le "demi-pont" entre ses deux bornes principales.

6 - Alimentation selon l'une quelconque des revendications 1,2,3,4 ou 5, caractérisée , d'une part, en ce que le convertisseur (9) de tension alternative à isolation galvanique est un transformateur (91) bobiné sur un tore, d'autre part, en ce que ce tore est constitué par un matériau magnétique à forte perméabilité, tel que par exemple une ferrite, et en outre, en ce que le bobinage dudit transformateur (91) est réalisé de manière à minimiser la capacité parasite existant entre son "primaire" et son "secondaire".

7 - Alimentation selon l'une quelconque des revendications 1,2,3,4,5 ou 6, caractérisée en ce que l'étage de commande de l'onduleur (8) lui impose un temps mort à chaque demie période du découpage de la tension continue TC2.

8 - Alimentation selon l'une quelconque des revendications 1,2,3,4,5,6 ou 7, caractérisée en ce qu'un circuit auxilliaire de contrôle général de l'alimentation (1) est relié à l'étage de commande de l'onduleur (8), à l'étage de commande du hacheur (4) et au moyen de mise en court-circuit du récepteur (13), de manière à pouvoir interrompre le fonctionnement dudit hacheur (4) un temps déterminé avant l'ordre de ladite mise en court-circuit.

_Fig.1_

_Fig.2_

_Fig.3_

_Fig.4_

EP 0 385 845 A1

Fig 5

_Fig_6_

EP 0 385 845 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-096843 (TOKYO SHIBAURA DENKI KK) <br> * page 6, ligne 34 - page 11, ligne 1; figures 4, 5 * <br> --- | 1, 3-5 | H05B41/30 <br> H01S3/097 <br> H02M3/158 |
| A | US-A-4578630 (GROSCH) <br> * colonne 2, ligne 49 - colonne 3, ligne 26; figure 1 * <br> --- | 1, 3 | |
| A | ELECTRONIC ENGINEERING. <br> vol. 56, no. 696, décembre 1984, LONDON GB <br> page 34 N. Miron: <br> "Stabilising a laser discharge current" <br> * le document en entier * <br> --- | 1, 6 | |
| A | US-A-4716569 (BEES) <br> * abrégé; figure 1 * <br> ----- | 1 | |

DOMAINES TECHNIQUES
RECHERCHES (Int. Cl.5 )

H05B
H01S
H02M
H02H
H05G

Le présent rapport a été établi pour toutes les revendications

| Lieu de la recherche | Date d'achèvement de la recherche | Examinateur |
|---|---|---|
| LA HAYE | 22 MAI 1990 | VAN DEN DOEL J. |

EPO FORM 1503 03.82 (P0402)